# EUROPEAN PATENT SPECIFICATION

(11) **EP 3 261 799 B1**
(45) Date of publication and mention of the grant of the patent: **17.06.2020**
(21) Application number: 16712510.3
(22) Date of filing: 24.02.2016
(51) Int. Cl.: B23K 37/02, B23K 37/047, B23K 37/053, B23K 26/38, B23K 26/282, B23K 101/06, B23K 103/04

(54) **LASER WELDING TWIP STEEL TUBULAR COMPONENTS**
LASERSCHWEISSEN VON ROHRFÖRMIGEN KOMPONENTEN AUS TWIP-STAHL
COMPOSANTS TUBULAIRES EN ACIER À PLASTICITÉ INDUITE PAR MACLAGE À SOUDAGE AU LASER

(30) Priority: 24.02.2015 IT TO20150129
(43) Date of publication of application: 03.01.2018
(73) Proprietor: ELETTROSYSTEM S.R.L., SCURZOLENGO (IT)
(72) Inventor: TONA, Giuseppe, 14030 Scurzolengo (IT)
(74) Representative: Giannini, Manuela
(86) International application number: PCT/IB2016/051014
(87) International publication number: WO 2016/135654

(56) References cited:
- EP-A1- 1 818 129
- DE-A1-102008 022 713
- JP-A- H0 366 485
- US-A- 4 001 543
- US-A1- 2012 298 637
- US-A1- 2014 223 743
- US-A1- 2014 346 163
- P.I. Temple: "Laser Beam Welding" In: "Welding Handbook - Ninth Edition - Volume 3 - Welding processes Part 2", 12 December 2007 (2007-12-12), American Welding Society, XP055281261, ISBN: 978-0-87171-053-6 page 506, 528, pages 506, 528

## Description

### TECHNICAL FIELD

The present invention relates to laser welding of tubular components made of TWIP (Twinning-Induced Plasticity) steel.

### STATE OF THE ART

As already known, TWIP steel is a special steel characterized by a high content of manganese and by an austenitic microstructure plastically deformable through a mechanical twinning process.

In terms of mechanical characteristics, this feature results in very high tensile strength and ductility and in a remarkable impact toughness, even at low temperatures and at a high strain rate. These features make the TWIP steels very suitable for many applications, in particular in the automotive industry, for the realization of bumpers, chassis parts, door structures and, in general, of all those automotive structural components necessarily provided with a high energy-absorbing capacity in case of impacts to ensure the safety of the passengers. The excellent combination of mechanical strength and resistance to dynamic stress of this steel further allows to reduce the resistant section of the specific component, with a consequent reduction in weight of the component and, therefore, of the vehicle, with an obvious economic advantage.

However, the present diffusion of TWIP steels as a material for automotive parts has been strongly limited due to the difficulties met in finding a suitable welding method which permanently connects two TWIP steel components without compromising the intrinsic mechanical properties of the material, so that the assembly formed by the joined components ensures the same high structural performances of the individual components.

A welding technique so far used to weld TWIP steel elements is the traditional MIG (Metal Inert Gas) welding. However, this technique has not given satisfactory results because it involves a high-energy expenditure (approximately 2.2 kW, with prolonged welding time), because the processing temperatures alter the aforesaid intrinsic characteristics and because it requires the addition of a filler, with consequent increased costs and prolonged welding time.

EP 1 818 129 A1 discloses the preamble of claim 1. The system comprises a laser assembly and a tube supporting assembly. The tube supporting assembly comprises a pair of opposed mandrels adapted to clamp and to rotate two tubes to be welded with abutting ends. The laser assembly comprises a nozzle for delivery of a laser beam, which is focused on the abutting ends of the tubes to perform a radial laser weld during rotation of the tubes.

US 2014/346163 A1 discloses a system for welding segments of a pipeline. The system includes an external alignment mechanism for externally supporting and manipulating the orientation of pipe segments in order to align relative segments. The system also includes an internal welding mechanism for applying a weld to an interior face joint of the two abutted pipe segments. The internal welding mechanism includes a torch for applying a weld, a laser for tracking the weld profile and guiding an articulating head of the torch, and a camera for visually inspecting the weld after the weld is applied.

### OBJECT AND SUMMARY OF THE INVENTION

The object of the present invention is to provide a laser welding plant to weld TWIP steel tubular components, which allows the aforesaid limitations of traditional welding techniques to be overcome.

According to the present invention, a laser welding plant is provided to weld TWIP steel components, as claimed in the appended claims.

### BRIEF DESCRIPTION OF THE DRAWINGS

The invention will be now described with reference to the accompanying drawings, which show a non-limiting embodiment, wherein:
Figure 1 is a schematic plan view of a preferred embodiment of the laser welding plant of the present invention;
Figures 2 to 5 show, in perspective view, with parts removed for clarity's sake, respective stations of the laser welding plant of Figure 1;
Figures 6 to 9 show, on an enlarged scale, a detail of the laser welding station of Figure 4 in respective different operating positions; and
Figure 10 shows a power-time diagram of a preferred welding cycle achievable with the laser welding plant of the present invention.

### PREFERRED EMBODIMENTS OF THE INVENTION

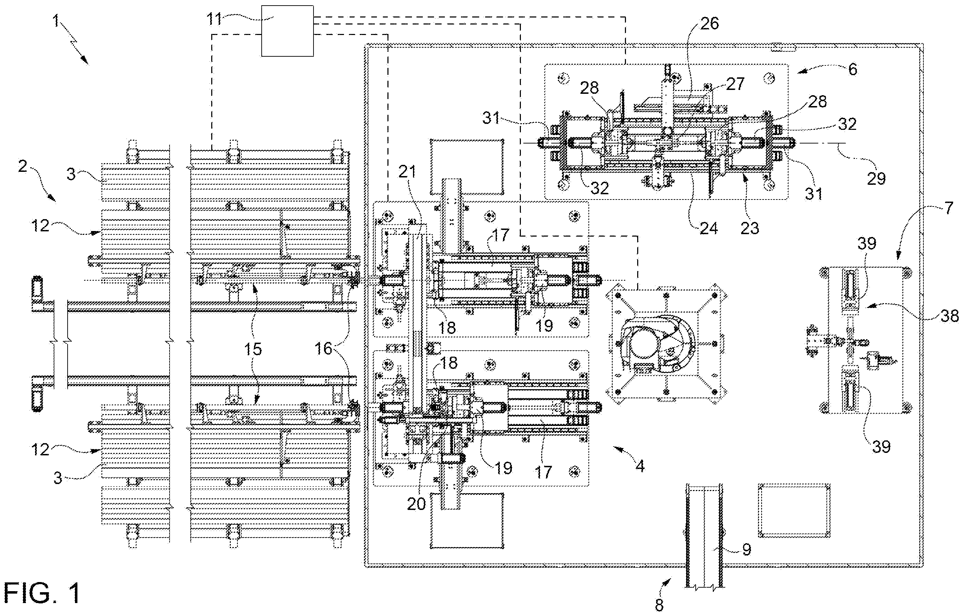

With reference to the attached Figures, Figure 1 indicates, as a whole, a laser welding plant to weld TWIP steel tubular components having any shape and equal or different thickness. Moreover, the welding profile, i.e. the line along which the tubular components are joined, can be a line having any shape, lying on a plane, in particular a plane transverse to the axis of the tubular components, or a three-dimensional curve.

For purely illustrative purposes, in the following discussion reference will be made to the laser welding of two tubes with a circular section, having the same diameter and different thickness.

Figure 1 schematically shows the working stations composing the plant 1. In particular, the plant 1 comprises a feeding station 2 for feeding a succession of tubular bars 3 to a cutting station 4, where the bars 3 are transversely cut in tubular pieces 5 having a predefined length.

The cutting station 4 is preferably arranged within a substantially rectangular working area, further comprising, on a side adjacent to the cutting station 4, a welding station 6, where the pieces 5 are welded together to form a finished product, and a testing station 7, which faces the cutting station 4 and is equipped to test the sealing quality of the welded joints and to mark the finished products. The working area finally comprises an output station 8 provided with a conveyor device 9, in the example shown a belt conveyor, to receive the finished products from the testing station 7 and to forward them outside the working area, for storage or for further working.

The tubular pieces 5 and, then, the finished products, are moved by an anthropomorphic robot 10, which is arranged substantially at the centre of the working area for quickly and carefully transferring the pieces 5 or the finished products from one station to another, according to appropriate working sequences.

The feeding, cutting, welding, testing, and output stations are connected to a control electronic unit 11, which as described hereinafter, controls both the sequence of the processing steps through the various stations and the steps of the working cycle of each working station.

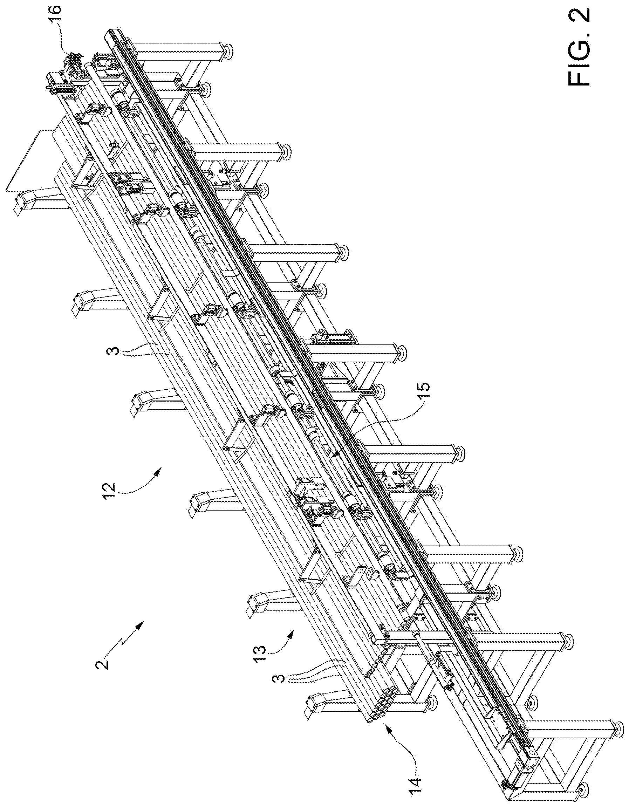

As shown in Figures 1 and 2, the feeding station 2 of the bars 3 includes two equal loaders 12 (of known type, only one of them being shown in Figure 2), which specularly face each other and respectively comprise a magazine 13, which is configured to accomodate a bundle 14 of tubular bars 3, and a separating device 15 configured to separate a single bar 3 at a time from the bundle 14 and axially feeding it to the cutting station 4. Each loader 12 is further provided with a thickness gauge 16 (of known type), which is mounted to one of the axial ends of the loader 12 to verify at any time the thickness of the bar 3 taken from the bundle 14 before feeding it to the cutting station 4.

To this regard, please note that the bars 3 contained in each of the bundles 14 are identical and may be equal or different from the bars 3 of the other bundle 14. In the case described, for example, each bundle 14 contains a respective plurality of bars 3 having the same diameter but a different thickness if compared with the bars 3 of the other bundle 14.

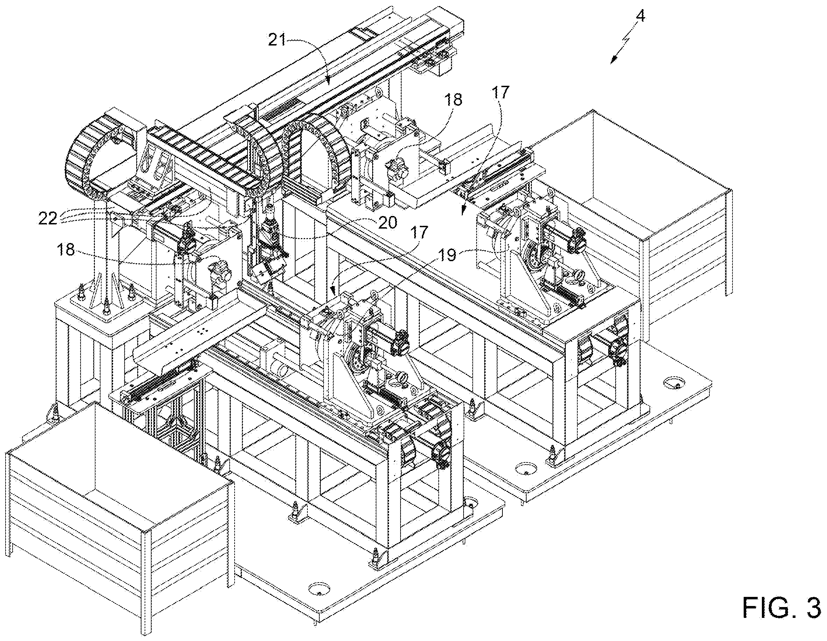

As shown in Figure 1 and, in greater detail, in Figure 3, the cutting station 4 comprises two cutting tables 17, each of them being aligned to a respective loader 12 for axially receiving a bar 3 to be cut into pieces 5.

For this purpose, each cutting table 17 comprises a respective pair of self-centring mandrels 18 and 19, wherein the mandrel 18 is fixed and receives a bar 3 axially inserted by its loader 12 through the mandrel 18. The mandrel 19 is axially aligned to the mandrel 18 and is mounted on a linear guide to move from and towards the mandrel 18, in a direction parallel to the axis of the bar 3 to be cut, so as to be arranged at a determined distance from the mandrel 18, according to the length of the pieces 5 to be obtained, and so as to axially lock the free end of the bar 3 to be cut.

The cutting station 4 finally comprises a cutting head 20, which is slidably mounted on a portal 21, which extends above the mandrels 18, to reciprocate, in use, in a direction transverse to the axis of the bars 3, and alternately occupy the two cutting tables 17.

The quality of the cutting sections of the pieces 5 is a very important factor for the good result of the subsequent welding process and, for this purpose, a laser cutting head is used to ensures a quick, clean and accurate cutting with no further finishing operations.

The electronic control unit 11 controls the displacement of the cutting head 20 between the two cutting tables 17 and its movement with regard to each of them. For this purpose, the cutting head 20 is mounted on the portal 21 by means of three electrical axes 22 (of known type), each of which is connected to the electronic control unit 11 and comprises a motorized slide, cantilevered and slidingly mounted on the crosspiece of the portal 21, and a position transducer.

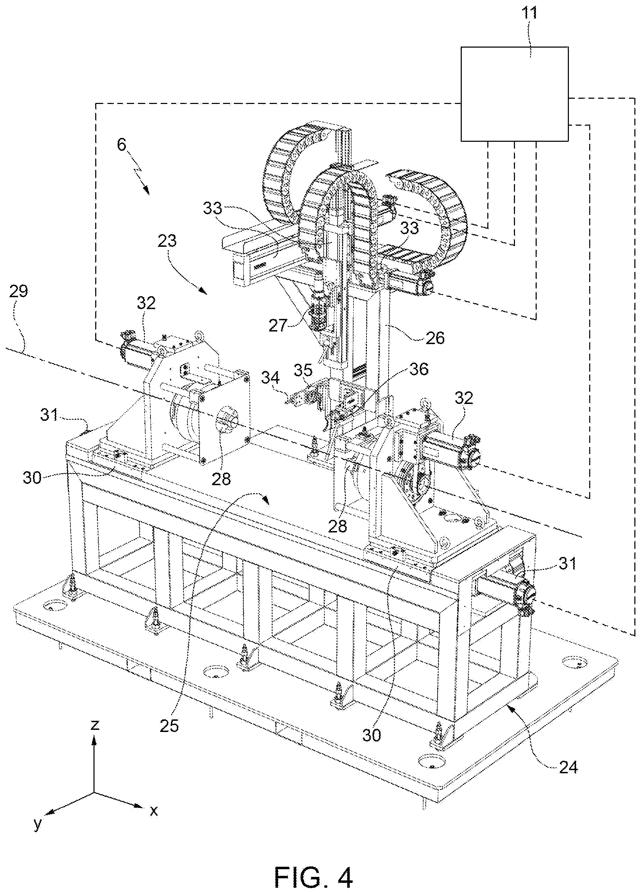

As shown in Figure 4, the welding station 6 comprises a frame 23 comprising, in turn, a base 24, which is limited at the top by a generally rectangular horizontal plane 25, on which, as discussed hereinafter, the two locking and positioning devices of respective pieces 5 to be welded are slidably mounted. The frame 23 also comprises a vertical upright 26, which is arranged along a longer side of the plane 25 in an intermediate position between the two said positioning devices and rises above the plane 25 to support a laser welding head 27.

Conveniently, the welding head 27 uses a laser of the so-called "fibre" type, which, as known, requires a relatively low welding power, of the order of 2 KW, which does not involve a strong heating of the material to be welded and preserves the mechanical qualities of TWIP steel.

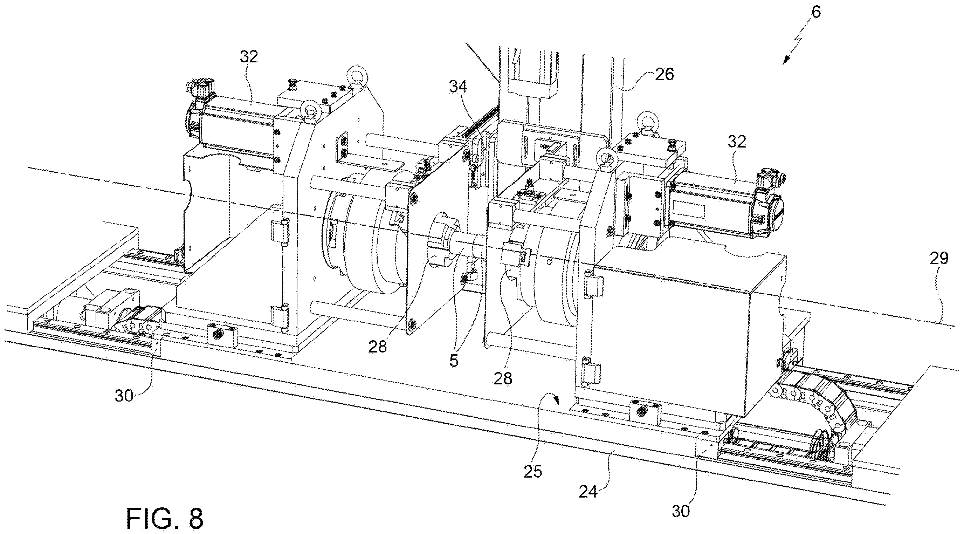

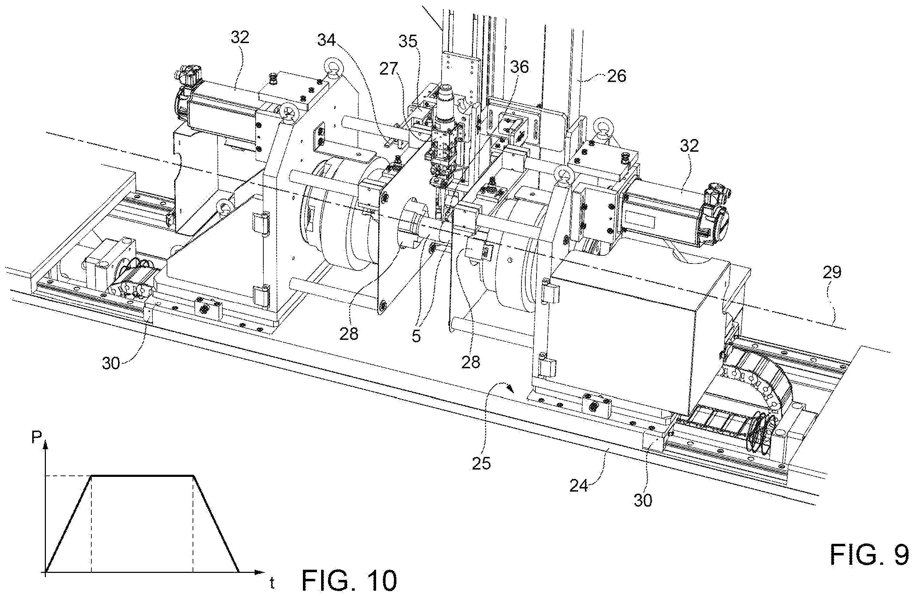

The above-mentioned locking and positioning devices of the pieces 5 comprise respective opposing mandrels 28, which are coaxial to a horizontal axis 29 and are slidingly fitted on the plane 25 to move, along the axis 29, between respective locking positions (Figures 4, 6 and 7), where the two mandrels 28 have a maximum distance between them for receiving and axially locking the respective tubular pieces 5, and respective welding positions (Figures 8 and 9), where the two mandrels 28 are close to each other and have the ends to be welded of the respective pieces 5 exactly below the laser welding head 27.

To this aim, each mandrel 28 is mounted on a respective slide 29, which is slidingly coupled to the plane 25 through a straight guide 30 parallel to the axis 29 and is provided with its own linear motor 31 connected to the electronic control unit 11.

The mandrels 28 are preferably self-centring, and each of them comprises a plurality of clips, three in the case of circular tubes, to tighten the respective tubular piece 5 and to set it in rotation, during the welding and under the thrust of a respective motor 32, about the axis 29 and in synchrony with the other piece 5.

As shown in Figure 4, the laser welding head 27 is mounted on the upright 26 by means of three electrical axes 33 (of known type), each of them having a different freedom of translation to allow the laser welding head 27 to move along an x axis, parallel to the axis 29, along a horizontal y axis, perpendicular to the x axis, and along a vertical z axis. The three electrical axes 33 are controlled by the electronic control unit 11 and precisely move the welding head 27 along the x, y, z axes in a preliminary calibration step of the welding station 6, and in an operating welding step, as discussed hereinafter. In general, according to a preferred welding cycle, the laser welding head 27 is moved along the x and y axes only in an initial calibration step of the welding station 6, while at each working cycle it is moved along the z axis between a raised rest position (Figure 4) and a lowered operating position (Figure 9).

According to a different embodiment not shown, the laser welding head 27 is moved by an anthropomorphic robot (of known type), which, being able to move the welding head 27 in a three-dimensional space, enables the manufacture of welding profiles of any shape and complexity.

Below the laser welding head 27, the upright 26 supports an alignment device, whose function is measuring the actual axial position of one of the two pieces 5 after it has been axially locked in the respective mandrel 28 in order to determine the deviation of this position from a theoretical locking position and to take into account this deviation when the mandrel 28 is moved, with the piece 5, to its welding position.

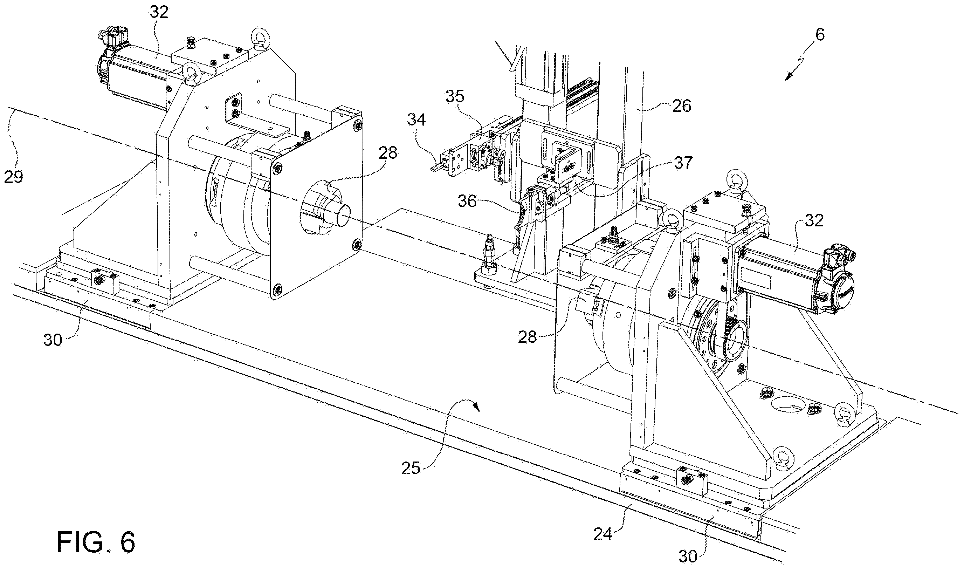

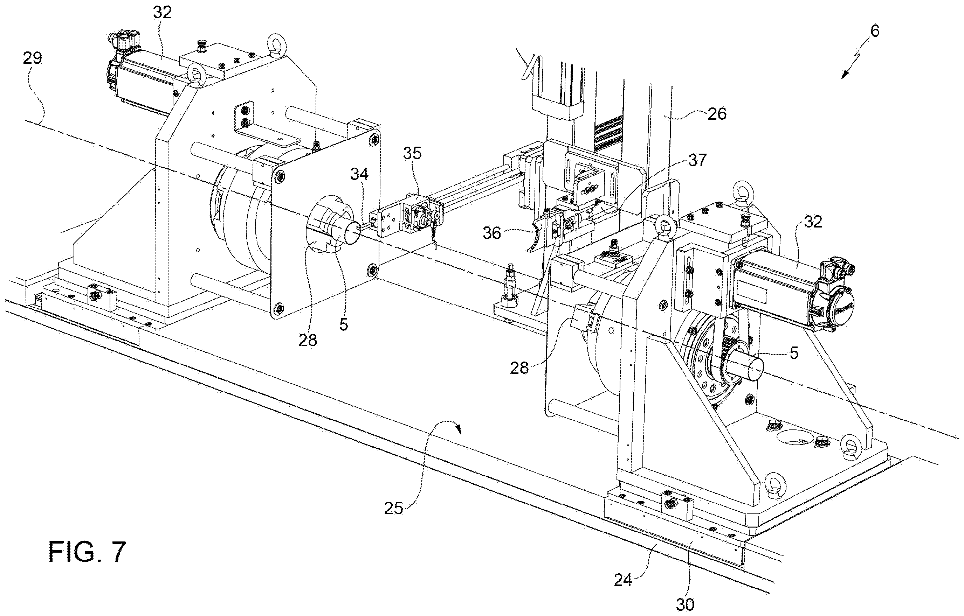

As more clearly shown in Figures 6 and 7, the alignment device comprises a position transducer 34 mounted on a motorized movable head 35 which is arranged on a side of the upright 26 and displaces along a straight guide parallel to the y axis to move the position transducer 34 on a horizontal plane passing through the axis 29, between a retracted rest position (Figure 6), where the position transducer 34 is close to the side of the upright 26 in a remote position with respect to the plane 25, and an advanced operating position (Figure 7), where the position transducer 34 extends above the plane 25 and becomes the end stop free from the piece 5, drawn near thanks to the linear displacement of the mandrel where it had been previously loaded and locked (mandrel 28, arranged on the same side of the upright 26) to measure the axial position of the piece 5 and to transmit to the electronic control unit 11 an electrical signal indicating said position.

Finally, the upright 26 supports a nozzle 36 emitting, during the welding step, a flow of inert cover gas, typically argon, in the junction area of the pieces 5 to protect the metal to be welded from unwanted oxidation phenomena which could compromise the quality of the welded joint. The nozzle 36 is mounted to the movable end of a linear actuator 37, which is controlled by the electronic control unit 11 to move the nozzle 36 from a retracted rest position (Figures 6-8) to an advanced operating position (Figure 9), where the nozzle 36 extends above the plane 25, below the laser welding head 27, and faces the junction area between the two tubular pieces 5 to be welded.

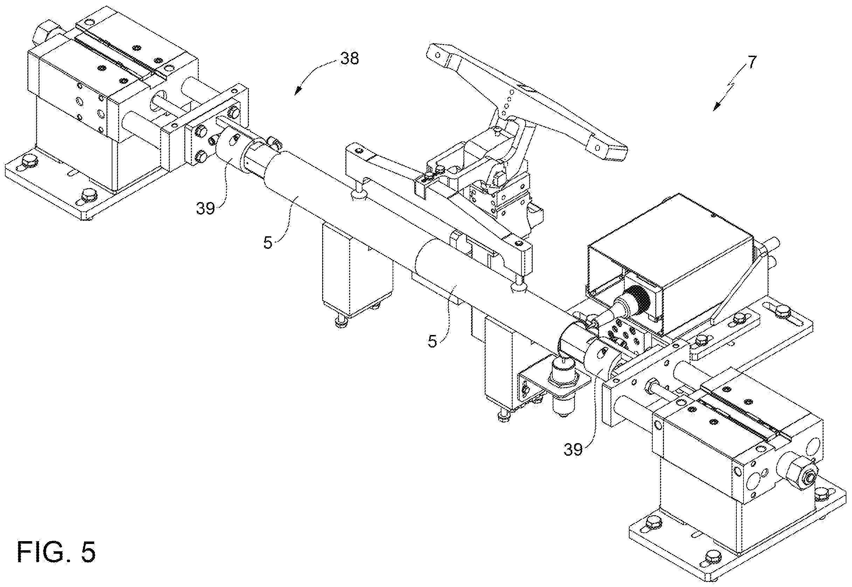

As shown in Figure 5, finally, the testing station 7 comprises a control device 38 performing, normally at random, a non-destructive sealing test on the welded pieces 5 to check the quality of the welded joint, and a marking device 39 to affix an appropriate label on the finished products which are deemed suitable.

A variety of known types of control devices operating according to different principles, e.g. radiographic tests, ultrasounds, penetrant liquids, etc. can be used to perform the sealing test.

In the shown example, it is used a compressed-air control device 38 comprising: two expanding pliers 39 which can be introduced in the open ends of the welded pieces 5 to create, inside the pieces 5, a sealed chamber; a device for feeding compressed air inside the sealed chamber; digital pressure transducers (not visible in Figure 5) to detect any pressure drop.

The operation of the welding plant 1 is clearly derivable from that described above with regard to the sequence of the processing operations through the feeding, cutting, welding, testing and output stations.

However, in completion of the aforesaid, it is appropriate to consider in detail the steps of the welding cycle involving the two pieces 5 to be welded within the welding station 6.

The welding cycle will be hereinafter described with reference to Figures 4 and to Figures 6 to 9, illustrating five successive operating configurations of the welding station 6 corresponding to the following five steps of the welding cycle.

### STEP 1, Figure 4: REST CONFIGURATION

In this configuration, the welding station 6 is waiting to receive the pieces 5 to be welded. The mandrels 28 occupy their respective locking positions and are arranged at the maximum distance from one another; the laser welding head 27 occupies its raised rest position; the position transducer 34 and the nozzle 36 occupy the respective retracted rest positions.

### STEP 2, Figure 6: POSITIONING THE FIRST PIECE

In this step, the anthropomorphic robot 10, controlled by the electronic control unit 11, introduces a first piece 5 inside the mandrel 28 arranged on the same side of the position transducer 34. The mandrel 28 is closed to lock the piece 5 in a predetermined locking position.

### STEP 3, Figure 7: MEASURING THE ALIGNMENT OF THE FIRST PIECE AND POSITIONING THE SECOND PIECE

Now, the position transducer 34 is moved to its advanced position and brought in contact with the piece 5. The position transducer 34 measures the actual axial position of the piece 5 and transmits a corresponding electrical signal to the electronic control unit 11, which determines, on the basis of this measure, the possible deviation between the actual position of the piece and a reference position where the piece should be located.

Simultaneously to this measurement or immediately after, the anthropomorphic robot 10 introduces a second piece 5 through the other mandrel 28, placing it in a determined locking position. The mandrel 28 is then closed to secure the position of the piece 5, which, given the coaxiality of the mandrels, is coaxial to the axis 29 and to the other piece 5.

### STEP 4, Figure 8: ADVANCING THE MANDRELS IN THEIR WELDING POSITIONS

Once both pieces 5 are axially locked in their respective mandrels 28, the piece 5, whose axial position has been measured, advances thanks to the respective mandrel 28 to the welding position, where the free end section to be welded must lie on the same vertical plane where also the laser beam generated by the welding head 27 lies. The stroke of the mandrel 28 from the initial locking position to the welding position is controlled by the electronic control unit 11, taking into account any deviation previously measured by the position transducer 34. This feedback correction system of the measured error allows to obtain an extremely precise and repeatable positioning of the piece 5, thus ensuring the perfect alignment of the section to be welded with the welding laser beam.

Once locked the first mandrel 28 with the respective piece 5 in the welding position, the second mandrel 28 advances to bring the free end section of the respective piece 5 in contact with the end section of the other piece 5. In order to ensure the perfect contact between the two sections along the welding line, the thrust of the second mandrel 28 is maintained to impart to the piece 5 an axial force of determined intensity directed towards the other piece 5.

According to a different embodiment, the correction of the positioning of the first piece 5 on the basis of the aforementioned deviation with respect to the reference value measured by the position transducer 34 can be carried out by moving the welding head 27 along the y axis instead of correcting the stroke of the first mandrel 28 when this latter is moved from the locking position to the welding position.

### STEP 5, Figure 9: WELDING

Now, the inert gas emission nozzle 36 is moved to the advanced position and the welding head 27 is moved to the lowered and activated position. The two end sections of the pieces 5 are vertically stricken by the welding laser beam while the pieces 5 are set in simultaneous rotation by respective mandrels about the axis 29.

The welding cycle which is thus implemented depends on the power and the time of application of the laser pulses, and is selected depending on the characteristics of the pieces 5 to be welded and on the type of welding to be obtained.

An example of the welding cycle is represented by the time-power diagram of Figure 10 and consists of:
i) application step of pre-welding points with a laser pulses power ranging from 250 to 800 W, for a laser pulses time ranging from 100 to 600 ms;
ii) ramp-up welding step, having a duration ranging from 150 to 600 ms and an increasing welding power ranging from 250 to 800 W;
iii) welding step with a constant laser power ranging from 1200 to 2500 W, for a time ranging from 2500 to 4500 ms;
iv) ramp-down welding step, having a duration ranging from 150 to 600 ms and a decreasing welding power ranging from 800 to 250 W.

The ramp-up and ramp-down welding steps are not strictly necessary, however, they are functional to the improvement of the welding joint in terms of homogeneity of material, with a consequent advantage for the mechanical characteristics of the finished product.

Finally, it is worth repeating that the described welding system allows an effective, rapid and relatively cost-contained welding of special steels, such as high-strength TWIP steels, which are very difficult to be joined using the conventional welding techniques without a deterioration of the mechanical characteristics of the finished product.

In particular, among the various technical features of the plant 1 of the present invention contributing to the success of a precise and efficient welding, an essential characteristic is represented by the fact that the two pieces 5 are constantly in contact and are constantly pressed together throughout the welding cycle, thus ensuring a perfect adhesion between the two end sections to be welded and a better adhesion of the material.

In conclusion, a further consideration is appropriate. The welding method implemented by the plant of the present invention allows to weld TWIP steel tubular components with a quality not reachable, to date, by systems using standard welding techniques such as MIG, MAG, TIG or traditional lasers.

In fact, commonly used welding techniques employ a very high welding power which, if applied to a TWIP steel, involves a heating of the material impairing those plastic qualities that make this type of steel particularly suitable for certain applications.

The welding system implemented by the plant of the present invention uses a so-called "fibre" laser, which, as known, requires a relatively low welding power, in the order of 2 KW. The use of such a laser does not, therefore, imply a strong heating of the material to be welded and preserves the mechanical qualities of the steel. By contrast, such a low welding power implies that the laser beam is concentrated in a very small spot and, therefore, it requires an extreme precision in the mutual positioning of the two components with respect to the welding head to obtain a quality welding.

This aim is achieved by the plant of the present invention thanks to two main features: the feedback control, allowing a precise positioning of the tubular pieces with respect to the head, and the maintenance of the two tubular pieces during the welding.

## Claims

1. Laser welding plant for laser welding TWIP steel tubular components; the laser welding plant (1) comprises two mandrels (28), which are coaxial and opposing along an alignment axis (29) and are mounted for relatively moving and assuming:
- respective locking positions, where the mandrels (28) are spaced apart for receiving and locking axially, in a position coaxial to the alignment axis, respective first and second tubular pieces (5),
- and respective welding positions, where the mandrels (28) are arranged closely so as for bringing in contact end sections of the respective first and second tubular pieces (5) to be welded;
**characterized in that** the laser welding plant (1) further comprises:
- a laser welding head (27) including a fibre laser operable to weld the end sections of the tubular pieces (5) when the mandrels (28) are in the respective welding positions,
- a position sensor (34) configured to measure an axial position of one of the tubular pieces (5) in one of the mandrels (28) when the mandrel (28) is in the locking position,
- and an electronic control unit (11) connected to the mandrels (28), to the laser welding head (27) and to the position sensor (34) and configured to cause the mandrels (28) to move into the respective welding positions taking into account any deviation previously measured by the position sensor (34), and to maintain the tubular pieces (5) axially pressed together during welding; wherein the electronic control unit (11) is further configured to cause the laser welding head (27) to perform a welding cycle comprising:
- an initial pre-welding step where pre-welding spots obtained with a laser pulse power from 250 to 800 W and for a laser pulse width from 100 to 600 ms are applied,
- a ramp-up welding step having a duration ranging from 150 to 600 ms and a welding power increasing from 250 to 800 W;
- a welding step having a duration from 2500 to 4500 ms and a constant laser power from 1200 to 2500 W, and
- a ramp-down welding step having a duration from 150 to 600 ms and a welding power decreasing from 800 to 250 W.

2. Laser welding plant according to claim 1, wherein the electronic control unit (11) is further configured to cause the first mandrel (28) and the welding head (27) to relatively move so as to bring the first mandrel (28) and the welding head (27) to respective welding positions; and then to cause the second mandrel (28) to move so as to bring and maintain the respective second tubular piece (5) thrusting against the first tubular piece (5).

3. Laser welding plant according to any one of the preceding claims, wherein the laser welding head (27) is mounted to displace along a first vertical axis (z) between a raised rest position and a lowered operating position; and wherein the electronic control unit (11) is further configured to cause:
- the position sensor (34) to measure the initial axial position of a first tubular piece (5) inserted in a first mandrel (28) when it is in the locking position;
- the first mandrel (28) to move from the locking position to the welding position travelling for a distance that takes into account the initial position of the first tubular piece (5) measured by the position sensor (34) so as to lead the end section of the tubular piece (5) in vertical alignment under the laser welding head (27); and
- the second mandrel (28) to move from its locking position to its welding position so that the respective second tubular piece (5) thrusts against the first tubular piece (5).

4. Laser welding plant according to any one of the preceding claims 1 to 2, wherein the laser welding head (27) is mounted to displace along a first vertical axis (z) between a raised rest position and a lowered operating position and along a second horizontal axis (x) parallel to said alignment axis (29); and wherein the electronic control unit (11) is further configured to cause:
- the position sensor (34) to measure the initial axial position of a first tubular piece (5) inserted in a first mandrel (28) when it is in the locking position;
- the first mandrel (28) to move from the locking position to the welding position;
- the laser welding head (27) to move along the second axis (x) travelling for a distance that takes into account the initial position of the first tubular piece (5) measured by the position sensor (34) so as to lead the laser welding head (27) in vertical alignment above the end section of the first tubular piece (5); and
- the second mandrel (28) to move from its locking position to its welding position so that the respective second tubular piece (5) thrusts against the first tubular piece (5).

5. Laser welding plant according to any one of the preceding claims, further comprising a laser cutting device (20) to transversely cut steel tubular bars (3) to make the tubular pieces (5) to be welded.

## Patentansprüche

1. Laserschweißanlage zum Laserschweißen von TWIP-Stahlrohrkomponenten; wobei die Laserschweißanlage (1) aus zwei Dornen (28) besteht, die koaxial und einander gegenüberliegend entlang einer Ausrichtungsachse (29) angeordnet und relativ zueinander beweglich montiert sind, und
jeweilige Arretierpositionen einnehmen, in denen die Dorne (28) voneinander beabstandet sind, damit in einer zur Ausrichtungsachse koaxialen Position jeweilige erste und zweite Rohrstücke (5) axial aufnehmbar und arretierbar sind, und
jeweilige Schweißpositionen, in denen die Dorne (28) eng angeordnet sind, so dass sie mit Endabschnitten der jeweiligen ersten und zweiten zu schweißenden Rohrstücke (5) in Kontakt bringbar sind;
**dadurch gekennzeichnet, dass** die Laserschweißanlage (1) weiterhin Folgendes umfasst:
- einen Laserschweißkopf (27) mit einem Faserlaser, der so betreibbar ist, dass er die Endabschnitte der Rohrstücke (5) schweißt, wenn sich die Dorne (28) in den jeweiligen Schweißpositionen befinden,
- einen Positionssensor in einem der Dorne (28), der dazu aufgebaut ist, eine axiale Position eines der Rohrstücke (5) zu messen, wenn sich der Dorn (28) in der Arretierposition befindet,
- und eine elektronische Steuereinheit (11), die mit den Dornen (28), dem Laserschweißkopf (27) und dem Positionssensor (34) verbunden und dazu aufgebaut ist, die Dorne (28) zu veranlassen, sich in die jeweiligen Schweißpositionen zu bewegen, wobei jede zuvor vom Positionssensor (34) gemessene Abweichung berücksichtigt wird, und die rohrförmigen Teile (5) während des Schweißens axial zusammengepresst zu halten; wobei die elektronische Steuereinheit (11) ferner dazu aufgebaut ist, den Laserschweißkopf (27) zu veranlassen, einen Schweißzyklus durchzuführen, der Folgendes umfasst:
- einen anfänglichen Vorschweißschritt, bei dem sich mit einer Laserpulsleistung zwischen 250 und 800 Watt und einer Laserpulsbreite zwischen 100 und 600 ms ergebende Vorschweißpunkte aufgebracht werden,
- einen Hochfahrschweißschritt mit einer Dauer zwischen 150 und 600 ms und einer von 250 auf 800 W ansteigenden Schweißleistung;
- einen Schweißschritt mit einer Dauer zwischen 2500 und 4500 ms und einer konstanten Laserleistung zwischen 1200 und 2500 W;
und
- einen Herunterfahrschweißschritt mit einer Dauer zwischen 150 und 600 ms und einer von 800 auf 250 W abnehmenden Schweißleistung.

2. Laserschweißanlage nach Anspruch 1, wobei die elektronische Steuereinheit (11) weiterhin dazu aufgebaut ist, den ersten Dorn (28) und den Schweißkopf (27) dazu zu veranlassen, sich relativ zueinander zu bewegen, um den ersten Dorn (28) und den Schweißkopf (27) in jeweilige Schweißpositionen zu bringen; und dann den zweiten Dorn (28) dazu zu veranlassen, sich zu bewegen, um das jeweilige zweite Rohrstück (5) gegen das erste Rohrstück (5) zu drücken und zu halten.

3. Laserschweißanlage nach einem der vorhergehenden Ansprüche, wobei der Laserschweißkopf (27) dazu montiert ist, entlang einer ersten vertikalen Achse (z) zwischen einer angehobenen Ruheposition und einer abgesenkten Arbeitsposition verschiebbar zu sein; und wobei die elektronische Steuereinheit (11) weiterhin dazu aufgebaut ist, Folgendes zu bewirken:
- Messen der anfänglichen axialen Position eines in einen ersten Dorn (28) eingesetzten ersten Rohrstücks (5), wenn er sich in der Arretierposition befindet, durch den Positionssensor (34);
- Bewegen des ersten Dorns (28) aus der Arretierposition in die Schweißposition über eine Strecke, die die durch den Positionssensor (34) gemessene Ausgangsposition des ersten Rohrstücks (5) berücksichtigt, so dass der Endabschnitt des Rohrstücks (5) senkrecht ausgerichtet unter den Laserschweißkopf (27) geführt ist; und
- Bewegen des zweiten Dorns (28) aus seiner Arretierposition in seine Schweißposition so, dass das jeweilige zweite Rohrstück (5) gegen das erste Rohrstück (5) drückt.

4. Laserschweißanlage nach einem der vorstehenden Ansprüche 1 oder 2, wobei der Laserschweißkopf (27) dazu montiert ist, sich entlang einer ersten vertikalen Achse (z) zwischen einer angehobenen Ruheposition und einer abgesenkten Arbeitsposition und entlang einer zweiten horizontalen Achse (x) parallel zur Ausrichtungsachse (29) zu verschieben; und wobei die elektronische Steuereinheit (11) weiterhin dazu aufgebaut ist, Folgendes zu bewirken:
- Messen der anfänglichen axialen Position eines in einen ersten Dorn (28) eingesetzten ersten Rohrstücks (5), wenn er sich in der Arretierposition befindet, durch den Positionssensor (34);
- Bewegen des ersten Dorns (28) aus der Arretierposition in die Schweißposition;
- Bewegen des Laserschweißkopfs (27) entlang der zweiten Achse (x) zum Verfahren über eine Strecke, die die durch den Positionssensor (34) gemessene Ausgangsposition des ersten Rohrstücks (5) berücksichtigt, um den Laserschweißkopf (27) senkrecht ausgerichtet über den Endabschnitt des ersten Rohrstücks (5) zu führen; und
- Bewegen des zweiten Dorns (28) aus seiner Arretierposition in seine Schweißposition so, dass das jeweilige zweite Rohrstück (5) gegen das erste Rohrstück (5) drückt.

5. Laserschweißanlage nach einem der vorstehenden Ansprüche, weiter mit einer Laserschneidvorrichtung (20) zum Schneiden von quer geschnittenen Stahlrohrstäben (3) zur Herstellung der zu schweißenden Rohrstücke (5).

## Revendications

1. Installation de soudage au laser pour le soudage au laser de composants tubulaires en acier TWIP ; l'installation de soudage au laser (1) comprenant deux mandrins (28), qui sont coaxiaux et opposés le long d'un axe d'alignement (29) et qui sont montés pour se déplacer l'un par rapport à l'autre et prendre :
- des positions de verrouillage respectives, auxquelles les mandrins (28) sont espacés l'un de l'autre pour recevoir et verrouiller axialement, à une position coaxiale à l'axe d'alignement, des première et seconde pièces tubulaires (5) respectives,
- et des positions de soudage respectives, auxquelles les mandrins (28) sont agencés à proximité l'un de l'autre de manière à mettre en contact des sections d'extrémité des première et seconde pièces tubulaires (5) respectives à souder ;
**caractérisée en ce que** l'installation de soudage au laser (1) comprend en outre :
- une tête de soudage au laser (27) incluant un laser à fibre utilisable pour souder les sections d'extrémité des pièces tubulaires (5) lorsque les mandrins (28) sont aux positions de soudage respectives,
- un capteur de position (34) configuré pour mesurer une position axiale de l'une des pièces tubulaires (5) dans l'un des mandrins (28) lorsque le mandrin (28) est à la position de verrouillage,
- et une unité de commande électronique (11) reliée aux mandrins (28), à la tête de soudage au laser (27) et au capteur de position (34) et configurée pour amener les mandrins (28) à se déplacer aux positions de soudage respectives en tenant compte de tout écart préalablement mesuré par le capteur de position (34),
et pour maintenir les pièces tubulaires (5) axialement pressées l'une contre l'autre au cours du soudage ; dans laquelle l'unité de commande électronique (11) est en outre configurée pour amener la tête de soudage au laser (27) à réaliser un cycle de soudage comprenant :
- une étape de pré-soudage initiale à laquelle des points de pré-soudage obtenus avec une puissance d'impulsion laser de 250 à 800 W et une largeur d'impulsion laser de 100 à 600 ms sont appliqués,
- une étape de montée en puissance de soudage ayant une durée allant de 150 à 600 ms et une puissance de soudage augmentant de 250 à 800 W ;
- une étape de soudage ayant une durée de 2 500 à 4 500 ms et une puissance constante de laser de 1 200 à 2 500 W, et
- une étape de réduction de puissance de soudage ayant une durée de 150 à 600 ms et une puissance de soudage diminuant de 800 à 250 W.

2. Installation de soudage au laser selon la revendication 1, dans laquelle l'unité de commande électronique (11) est en outre configurée pour amener le premier mandrin (28) et la tête de soudage (27) à se déplacer l'un par rapport à l'autre de manière à mettre le premier mandrin (28) et la tête de soudage (27) à des positions de soudage respectives ; puis pour amener le second mandrin (28) à se déplacer pour mettre et maintenir la seconde pièce tubulaire (5) respective en butée contre la première pièce tubulaire (5).

3. Installation de soudage au laser selon l'une quelconque des revendications précédentes, dans laquelle la tête de soudage au laser (27) est montée pour se déplacer le long d'un premier axe vertical (z) entre une position de repos élevée et une position de fonctionnement abaissée ; et dans laquelle l'unité de commande électronique (11) est en outre configurée pour amener :
- le capteur de position (34) à mesurer la position axiale initiale d'une première pièce tubulaire (5) insérée dans un premier mandrin (28) lorsqu'il se trouve à la position de verrouillage ;
- le premier mandrin (28) à se déplacer de la position de verrouillage à la position de soudage en parcourant une distance qui tient compte de la position initiale de la première pièce tubulaire (5) mesurée par le capteur de position (34) de manière à mettre la section d'extrémité de la pièce tubulaire (5) en alignement vertical sous la tête de soudage au laser (27) ; et
- le second mandrin (28) à se déplacer de sa position de verrouillage à sa position de soudage de sorte que la seconde pièce tubulaire (5) respective vienne en butée contre la première pièce tubulaire (5).

4. Installation de soudage au laser selon l'une quelconque des revendications 1 et 2, dans laquelle la tête de soudage au laser (27) est montée pour se déplacer le long d'un premier axe vertical (z) entre une position de repos élevée et une position de fonctionnement abaissée et le long d'un second axe horizontal (x) parallèle audit axe d'alignement (29) ; et dans laquelle l'unité de commande électronique (11) est en outre configurée pour amener :
- le capteur de position (34) à mesurer la position axiale initiale d'une première pièce tubulaire (5) insérée dans un premier mandrin (28) lorsqu'il se trouve à la position de verrouillage ;
- le premier mandrin (28) à se déplacer de la position de verrouillage à la position de soudage ;
- la tête de soudage au laser (27) à se déplacer le long du second axe (x) en parcourant une distance qui tient compte de la position initiale de la première pièce tubulaire (5) mesurée par le capteur de position (34) de manière à mettre la tête de soudage au laser (27) en alignement vertical au-dessus de la section d'extrémité de la première pièce tubulaire (5) ; et
- le second mandrin (28) à se déplacer de sa position de verrouillage à sa position de soudage de sorte que la seconde pièce tubulaire (5) respective vienne en butée contre la première pièce tubulaire (5).

5. Installation de soudage au laser selon l'une quelconque des revendications précédentes, comprenant en outre un dispositif de découpage au laser (20) pour découper transversalement des barres tubulaires d'acier (3) pour réaliser les pièces tubulaires (5) à souder.
